# EUROPÄISCHE PATENTANMELDUNG

(11) **EP 4 595 740 A1**
(43) Veröffentlichungstag der Anmeldung: **06.08.2025**
(21) Anmeldenummer: 24217476.1
(22) Anmeldetag: 04.12.2024
(51) Int. Cl.: A01D 43/08, A01F 29/22

(54) **SELBSTFAHRENDER FELDHÄCKSLER MIT EINER INDUKTIVEN ERFASSUNGSANORDNUNG**

(30) Priorität: 30.01.2024 DE 102024102610
(71) Anmelder: CLAAS Selbstfahrende Erntemaschinen GmbH, 33428 Harsewinkel (DE)
(72) Erfinder: Neitemeier, Dennis, 59510 Lippetal (DE); Cord-Kruse, Christian, 48231 Warendorf (DE); Klein Helmkamp, Marwin, 49080 Osnabrück (DE); Bönig Dr., Ingo, 33330 Gütersloh (DE); Wehner, Gregor, 88356 Ostrach Unterweiler (DE); Eggenhaus, Georg, 48369 Saerbeck (DE); Witte, Johann, 58730 Fröndenberg (DE); Goeres, Thomas, 33428 Harsewinkel (DE); Hinz, Patrick, 33428 Greffen (DE); Belau, Sven Carsten, 33332 Gütersloh (DE); Spachtholz, Christian, 88370 Ebenweiler (DE)
(74) Vertreter: CLAAS Gruppe

(57) **Zusammenfassung**

Die vorliegende Erfindung betrifft eine als selbstfahrenden Feldhäcksler (2) ausgeführte landwirtschaftliche Arbeitsmaschine (1) zum Aufnehmen, Bearbeiten und Weiterleiten von Erntegut. Dieser Feldhäcksler (2) weist eine Häckseleinrichtung (6) zum Zerkleinern des aufgenommenen Ernteguts auf, wobei die Häckseleinrichtung (6) ein Trommelgehäuse (21, 22) umfasst, in dem eine mehrere Häckselmesser (8) aufweisende Häckseltrommel (7) angeordnet ist. Ferner umfasst der Feldhäcksler (2) eine induktive Erfassungsanordnung (25) zur Zustandserfassung der Häckseleinrichtung (6).

Die vorliegende Erfindung beruht auf dem allgemeinen Gedanken, dass basierend auf den mittels der induktiven Erfassungsanordnung (25) erfassten Parametern ein Häckseltrommelzustand bezüglich der eingesetzten Häckseltrommel (7) erkannt und visualisiert wird.

## Beschreibung

Die vorliegende Erfindung betrifft eine als selbstfahrender Feldhäcksler ausgeführte landwirtschaftliche Arbeitsmaschine zum Aufnehmen, Bearbeiten und Weiterleiten von Erntegut. Dieser Feldhäcksler weist eine Häckseleinrichtung zum Zerkleinern des aufgenommenen Ernteguts auf, wobei die Häckseleinrichtung ein Trommelgehäuse umfasst, in dem eine mehrere Häckselmesser aufweisende Häckseltrommel angeordnet ist, wobei die Häckselmesser lösbar, insbesondere auswechselbar, angeordnet sind. Ferner umfasst der Feldhäcksler eine induktive Erfassungsanordnung zur Zustandserfassung der Häckseleinrichtung.

Aus der DE 10 2017 103 537 ist eine Sensoranordnung bekannt, die mittels induktiver Sensoren die umlaufenden Messer einer Häckseltrommelanordnung detektiert und aus dem ermittelten magnetischen Fluss einen Verschleißzustand der Häckselmesser ableitet, wobei sich der Verschleiß aus der jeweils induzierten Spannung ergibt.

Zwar ist der Verschleißzustand der Häckselmesser ein wichtiger Parameter, jedoch könnten die mittels der induktiven Erfassungsanordnung erfassten Daten bei einer umfassenderen Datenanalyse eingesetzt werden, um weitere wichtige Parameter zu ermitteln.

Der vorliegenden Erfindung liegt die Aufgabe zugrunde, eine verbesserte Ausführungsform des selbstfahrenden Feldhäckslers anzugeben, wobei die induktive Erfassungsanordnung in einem erweiterten Einsatzspektrum verwendet wird, um den Fahrer des Feldhäckslers bei der manuellen Konfiguration des selbstfahrenden Feldhäckslers bezüglich der Häckseltrommel aktiv zu unterstützen.

Diese Aufgabe wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, dass basierend auf den mittels der induktiven Erfassungsanordnung erfassten Parametern ein Häckseltrommelzustand bezüglich der eingesetzten Häckseltrommel erkannt und visualisiert wird.

Der erfindungsgemäße selbstfahrende Feldhäcksler umfasst einen Erntevorsatz zur Aufnahme von Erntegut und die Häckseleinrichtung zum Zerkleinern des aufgenommenen Ernteguts. Die Häckseleinrichtung weist ein Trommelgehäuse auf, in dem eine Häckseltrommel und mehrere Häckselmesser angeordnet sind, wobei die Häckselmesser lösbar, insbesondere auswechselbar, mit der Häckseltrommel verbunden sind. Zusätzlich ist an dem Trommelgehäuse eine Messerschleifeinrichtung mit einem Schleifstein zur Schleifung der Häckselmesser ausgebildet. Die Messerschleifeinrichtung kann derart ausgebildet sein, dass deren Schleifstein horizontal über die Breite der Häckseltrommel bewegbar ist, sodass jedes an der Häckseltrommel positionierte Häckselmesser schleifbar ist.

Zusätzlich weist der selbstfahrende Feldhäcksler eine induktive Erfassungsanordnung zur Erfassung von Parametern bezüglich der Häckseleinrichtung auf, die am Trommelgehäuse der Häckseleinrichtung angeordnet ist. Weitere Details bezüglich dieser induktiven Erfassungsanordnung ergeben sich aus der DE 10 2019 112 968 A1, auf deren Offenbarungsgehalt hiermit vollumfänglich Bezug genommen wird.

Eine Einstellvorrichtung ist zur Einstellung des Feldhäckslers vorgesehen, wobei die Einstellvorrichtung kommunizierend mit der induktiven Erfassungsanordnung und/oder mit der Messerschleifeinrichtung verbunden ist. Zwecks einer Aktivierung oder Deaktivierung eines Messerschleifvorganges ist die Messerschleifeinrichtung kommunizierend mit der Einstellvorrichtung verbunden. Zwecks einer Aktivierung oder Deaktivierung einer Parametererfassung ist die induktive Erfassungsanordnung kommunizierend mit der Einstellvorrichtung verbunden. Außerdem ist die induktive Erfassungsanordnung mit der Einstellvorrichtung für den Austausch des erfassten Parameters kommunizierend verbunden.

Die Einstellvorrichtung kann als Steuer- und/oder Regelvorrichtung ausgebildet sein, die eine Einstellung durch eine Steuerung und/oder Regelung des selbstfahrenden Feldhäckslers, insbesondere von Komponenten, insbesondere des Vorsatzgerätes und/oder der Arbeitsaggregate und/oder der induktiven Erfassungsanordnung und/oder der Messerschleifeinrichtung, des selbstfahrenden Feldhäckslers, bewirkt. Die Einstellvorrichtung kann eine Recheneinheit, insbesondere eine computerbasierte Recheneinheit, und einen Datenspeicher, insbesondere einen computerlesbaren Datenspeicher, aufweisen.

Unter einer kommunizierenden Verbindung kann zu verstehen sein, dass zwischen zwei miteinander kommunizierend verbundenen Komponenten eine Datenverbindung, insbesondere eine bidirektionale oder unidirektionale Datenverbindung, ausgebildet ist, mit der elektrische Signale, insbesondere Steuersignale und/oder Regelsignale und/oder Messsignale, in analoger Form und/oder digitaler Form übertragbar sind. Diese kommunizierende Verbindung, insbesondere bei mehr als zwei Komponenten, kann ein Bussystem ausbilden. Die kommunizierende Verbindung kann insbesondere kabellos und/oder drahtlos ausgebildet sein.

Die Einstellvorrichtung ist dazu vorgesehen und eingerichtet, insbesondere dazu ausgebildet und/oder programmiert, basierend auf den mittels der induktiven Erfassungsanordnung erfassten Parametern einen Häckseltrommelzustand bezüglich der eingesetzten Häckseltrommel zu erkennen und eine Visualisierung dieses erkannten Häckseltrommelzustandes zu initiieren. Der visualisierte Häckseltrommelzustand unterstützt den Fahrer des Feldhäckslers bei der erforderlichen manuellen Konfiguration des selbstfahrenden Feldhäckslers, wobei auf dieser Konfiguration basierend u.a. optimale Vorschubgeschwindigkeiten von Vorpresswalzen als auch Vorsatzdrehzahlen ermittelt werden. Durch den visualisierten Häckseltrommelzustand wird aktiv entgegengewirkt, dass der Fahrer eine Eingabe vergisst und/oder eine unrichtige Eingabe vornimmt, die zur falschen Schnittlängen und/oder zu erhöhten Kolbenverlusten führen würde. Somit kann der Fahrer des erfindungsgemäßen selbstfahrenden Feldhäckslers die erforderliche manuelle Konfiguration schnell selbst und sicher vornehmen, ohne einen Kundendienst zu kontaktieren.

Bei einer vorteilhaften Weiterbildung der erfindungsgemäßen Lösung ist vorgesehen, dass der Häckseltrommelzustand die Art der Häckselmesser der eingesetzten Häckseltrommel umfasst. Hierdurch wird gesichert, dass der Fahrer des selbstfahrenden Feldhäckslers mittels der Visualisierung des erkannten Häckseltrommelzustandes stets die Art der Häckselmesser der eingesetzten Häckseltrommel erfassen kann.

Bei einer vorteilhaften Weiterbildung der erfindungsgemäßen Lösung ist vorgesehen, dass der Häckseltrommelzustand die Anzahl der Häckselmesser umfasst. Hierdurch wird sichergestellt, dass der Fahrer des selbstfahrenden Feldhäckslers basierend auf der Visualisierung des erkannten Häckseltrommelzustandes stets die Anzahl der Häckselmesser der eingesetzten Häckseltrommel erfassen kann.

Bei einer vorteilhaften Weiterbildung der erfindungsgemäßen Lösung ist vorgesehen, dass der Häckseltrommelzustand den Beschädigungsgrad der Häckselmesser umfasst. Hierdurch wird gesichert, dass der Fahrer des selbstfahrenden Feldhäckslers mittels der Visualisierung des erkannten Häckseltrommelzustandes den Beschädigungsgrad der Häckselmesser frühzeitig erfassen kann, um Folgeschäden vorausschauend und/oder frühzeitig entgegenzuwirken.

Bei einer vorteilhaften Weiterbildung der erfindungsgemäßen Lösung ist vorgesehen, dass der Häckseltrommelzustand die Art der Häckseltrommel umfasst, sodass der Fahrer des selbstfahrenden Feldhäckslers stets schnell und einfach die Art der Häckseltrommel erfassen kann.

Bei einer vorteilhaften Weiterbildung der erfindungsgemäßen Lösung ist vorgesehen, dass die Einstellvorrichtung dazu eingerichtet ist, in Abhängigkeit des Beschädigungsgrades der Häckselmesser zu ermitteln, ob ein Häckselmesser defekt und/oder unrichtig montiert ist.

Bei einer vorteilhaften Weiterbildung der erfindungsgemäßen Lösung ist vorgesehen, dass die Einstellvorrichtung dazu eingerichtet ist, in Abhängigkeit des Beschädigungsgrades der Häckselmesser zu ermitteln, ob ein Häckselmesser gebrochen und/oder herausgebrochen ist.

Bei einer vorteilhaften Weiterbildung der erfindungsgemäßen Lösung ist vorgesehen, dass die Einstellvorrichtung dazu eingerichtet ist, in Abhängigkeit des Beschädigungsgrades der Häckselmesser zu ermitteln, ob ein Häckselmesser verschoben ist.

Bei einer vorteilhaften Weiterbildung der erfindungsgemäßen Lösung ist vorgesehen, dass die Einstellvorrichtung dazu eingerichtet ist, in Abhängigkeit des Beschädigungsgrades der Häckselmesser zu ermitteln, ob ein Häckselmesser verformt ist.

Bei einer vorteilhaften Weiterbildung der erfindungsgemäßen Lösung ist vorgesehen, dass der selbstfahrende Feldhäcksler innerhalb einer Fahrerkabine eine Anzeigeeinheit zur Visualisierung des Häckseltrommelzustandes aufweist. Die Einstellvorrichtung ist kommunizierend mit der Anzeigeeinheit verbunden und verwendet diese Anzeigeeinheit, um den erkannten Häckseltrommelzustand zu visualisieren.

Bei einer vorteilhaften Weiterbildung der erfindungsgemäßen Lösung ist vorgesehen, dass die Einstellvorrichtung dazu eingerichtet ist, mittels der Anzeigeeinheit einem Fahrer des selbstfahrenden Feldhäckslers darzustellen, welches Häckselmesser welchen Beschädigungsgrad aufweist.

Bei einer vorteilhaften Weiterbildung der erfindungsgemäßen Lösung ist vorgesehen, dass die Einstellvorrichtung dazu eingerichtet ist, mittels der Anzeigeeinheit einem Fahrer des selbstfahrenden Feldhäckslers darzustellen, welches Häckselmesser ausgetauscht und/oder ersetzt werden muss.

Bei einer vorteilhaften Weiterbildung der erfindungsgemäßen Lösung ist vorgesehen, dass die Einstellvorrichtung dazu eingerichtet ist, basierend auf dem mittels der induktiven Erfassungsanordnung erfassten Parametern und Drehzahlsensorinformationen genau eine Umdrehung der Häckseltrommel zu ermitteln.

Bei einer vorteilhaften Weiterbildung der erfindungsgemäßen Lösung ist vorgesehen, dass die Drehzahlsensorinformationen mittels einem Drehzahlsensor zur Messung einer Drehzahl eines Nockenrades der Häckseleinrichtung erfasst wird.

Bei einer vorteilhaften Weiterbildung der erfindungsgemäßen Lösung ist vorgesehen, dass das Nockenrad eine, insbesondere genau eine, Nocke aufweist, die als Indikator für genau eine vollständige Umdrehung des Nockenrades fungiert. Eine vollständige Umdrehung des Nockenrades entspricht einer vollständigen Umdrehung der Häckseltrommel, sodass basierend auf diesem Indikator die Parameter bezüglich der Häckseleinrichtung schon nach einer einzigen vollständigen Umdrehung dem jeweiligen Häckselmesser zugeordnet werden können.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine Darstellung eines selbstfahrenden Feldhäckslers in Seitenansicht, und
- Fig. 2: eine Detailansicht des Feldhäckslers nach Figur 1 mit einer induktiven Sensoranordnung.

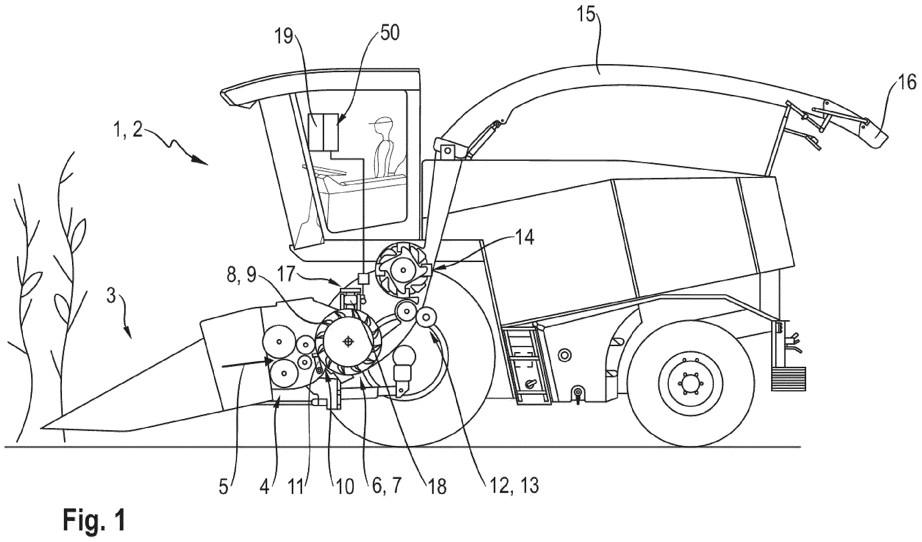

Die Fig. 1 zeigt schematisch eine als selbstfahrender Feldhäcksler 2 ausgeführte landwirtschaftliche Arbeitsmaschine 1, die in ihrem frontseitigen Bereich einen Erntevorsatz 3 aufnimmt. Im rückwärtigen Bereich des Erntevorsatzes 3 sind diesem sogenannte Einzugs- und Vorpresswalzen 4 zugeordnet, die den Erntegutstrom 5 aus dem Erntevorsatz 3 kommend annehmen, verdichten und in ihrem rückwärtigen Bereich an eine Häckseleinrichtung 6 übergeben. Die Häckseleinrichtung 6 umfasst eine Häckseltrommel 7, die mit Häckselmessern 8 einer Häckselmesseranordnung 9 bestückt ist. Die umlaufenden Häckselmesser 8 werden im Einzugsbereich 10 der Häckseltrommel 7 an einer sogenannten Gegenschneide 11, über die der zu zerkleinernde Erntegutstrom 5 gefördert wird, vorbeibewegt.

Im rückwärtigen Bereich der Häckseltrommel 7 wird das zerkleinerte Erntegut 5 sodann entweder an eine als sogenannter Cracker 12 ausgeführte Nachzerkleinerungseinrichtung 13 oder direkt an eine Nachbeschleunigungseinrichtung 14 übergeben. Während die Nachzerkleinerungseinrichtung 13 die körnigen Bestandteile des Erntegutstromes 5, etwa Maiskörner, weiter zerkleinert beschleunigt der Nachbeschleuniger 14 den Erntegutstrom 5 in einer Weise, dass dieser durch einen Auswurfkrümmer 15 bewegt und endseitig im Bereich einer Auswurfklappe 16 aus dem Feldhäcksler 2 austreten und an ein nicht dargestelltes Transportfahrzeug übergeben werden kann. Zudem ist der Häckseltrommel 7 umfangseitig eine an sich bekannte und daher hier nicht im Detail beschriebene Messerschleifeinrichtung 17 zugeordnet, deren Schleifstein 18 horizontal über die Breite der Häckseltrommel 7 bewegbar ist, sodass jedes am Umfang der Häckseltrommel 7 positionierte Häckselmesser 8 schleifbar ist. Zwecks Aktivierung oder Deaktivierung des Messerschleifvorganges ist die Messerschleifeinrichtung 17 in signalübertragender Weise mit einer Einstellvorrichtung 19 verbunden.

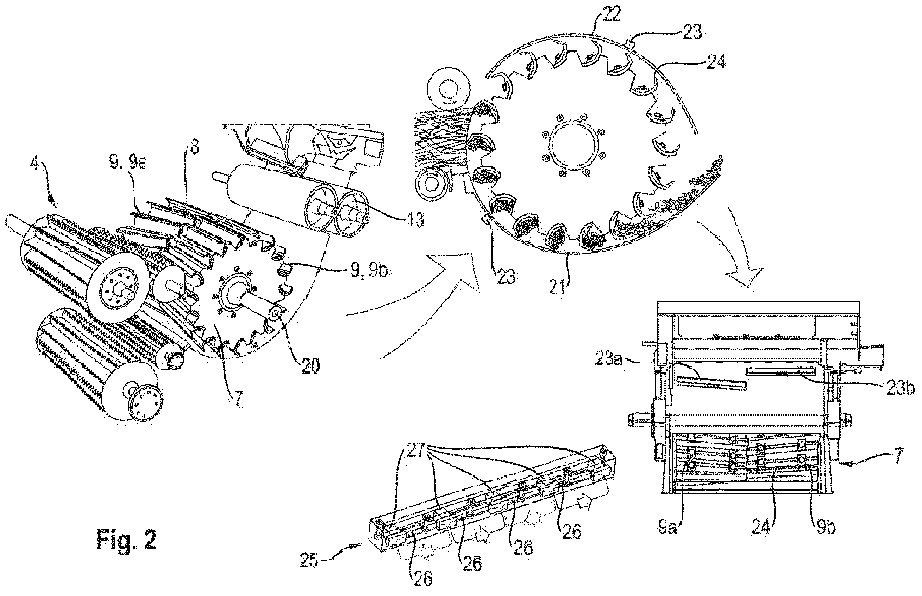

Gemäß Fig. 2 umfasst die Häckselmesseranordnung 9 rechts- und linksseitige Häckselmesseranordnungen 9a, 9b, wobei jede Häckselmesseranordnung 9a, 9b eine Vielzahl am Umfang der Häckseltrommel 7 schräg zur Drehachse 20 der Häckseltrommel 7 positionierte Häckselmesser 8 umfasst. Die Häckseltrommel 7 wird unterseitig von einem vorzugsweise aus Edelstahl bestehenden Trommelboden 21 ummantelt. Oberseitig wird die Häckseltrommel 7 von einer vorzugsweise ebenfalls aus Edelstahl bestehenden Trommelrückwand 22 umschlossen. Die Trommelrückwand 22 und der Trommelboden 21 bilden das Trommelgehäuse aus.

Eine Sensoranordnung 23 kann gemäß dem in der Fig. 2 dargestellten Ausführungsbeispiel entweder an der Trommelrückwand 22 oder am Trommelboden 21 positioniert sein. Es ist auch denkbar, dass zugleich sowohl am Trommelboden 21 als auch an der Trommelrückwand 22 eine Sensoranordnung 23 angeordnet ist. Unabhängig von der konkreten Positionierung sind jeder Häckseltrommel 7 zumindest zwei Sensoranordnungen 23a, 23b in der Weise zugeordnet, dass jeweils eine der Sensoranordnungen 23a, 23b der jeweils zugehörigen Häckselmesseranordnung 9a, 9b zugeordnet ist, wobei jede Sensoranordnung 23a, 23b die Schneidkante 24 des jeweiligen Häckselmessers 7 vollständig überdeckt, sodass jede Schneidkante 24 über ihrer gesamten Länge durch die jeweilige Sensoranordnung 23a, 23b detektiert werden kann. Weiter liegt es im Rahmen der Erfindung, dass die jeweilige Sensoranordnung 23a, 23b entweder parallel zur Drehachse 20 der Häckseltrommel 7 oder parallel zur Schneidkante 24 der Häckselmesser 8 am Trommelboden 21 und/oder der Trommelrückwand 22 positioniert ist. Die rechte untere Darstellung in Figur 2 zeigt nur beispielhaft die möglichen Ausrichtungen der Sensoranordnungen 23a, 23b in einer einzigen Darstellung. Vorzugsweise werden alle Sensoranordnungen 23a, 23b entweder parallel zur Drehachse 20 der Häckseltrommel 7 oder parallel zur Schneidkante 24 der Häckselmesser 8 positioniert sein.

Im dargestellten Ausführungsbeispiel der Fig. 2 sind die Sensoranordnungen 23a, 23b als induktive Erfassungsanordnungen 25 ausgeführt, wobei jede Sensoranordnung 23 ein oder mehrere magnetische Erregeranordnungen 26 sowie jeweils eine mit diesen zusammenwirkende Polanordnung 27 umfasst. Diese induktive Erfassungsanordnung 25 ist zur Erfassung eines Parameters bezüglich der Häckseleinrichtung 6 vorgesehen und ausgebildet. Weitere Details bezüglich der induktiven Erfassungsanordnungen 25 ergeben sich aus der DE 10 2019 112 968 A1, auf deren Offenbarungsgehalt hiermit vollumfänglich Bezug genommen wird.

Erfindungsgemäß ist die Einstellvorrichtung 19 dazu vorgesehen und eingerichtet, basierend auf den mittels der induktiven Erfassungsanordnung 25 erfassten Parametern einen Häckseltrommelzustand bezüglich der eingesetzten Häckseltrommel 7 zu erkennen und zu visualisieren.

Wie in der Fig. 1 angedeutet, weist der selbstfahrende Feldhäcksler 2 innerhalb einer Fahrerkabine eine Anzeigeeinheit 50 auf, wobei die Einstellvorrichtung 19 dazu eingerichtet ist, eine Visualisierung des erkannten Häckseltrommelzustandes für einen Fahrer des Feldhäckslers 2 mittels der Anzeigeeinheit 50 darzustellen.

Ferner kann der Häckseltrommelzustand die Art der Häckselmesser 8 der eingesetzten Häckseltrommel 7 und/oder die Art der Häckseltrommel 7 umfassen. Hierdurch wird gesichert, dass der Fahrer des selbstfahrenden Feldhäckslers 2 durch die Visualisierung des erkannten Häckseltrommelzustandes mittels der Anzeigeeinheit 50 stets die Art der Häckselmesser 8 der eingesetzten Häckseltrommel 7 zulässig erfassen kann.

Zusätzlich kann der Häckseltrommelzustand die Anzahl der Häckselmesser 8 umfassen, sodass der Fahrer des selbstfahrenden Feldhäckslers 2 durch die Visualisierung des erkannten Häckseltrommelzustandes mittels der Anzeigeeinheit 50 stets die Anzahl der Häckselmesser 8 der eingesetzten Häckseltrommel schnell und verlässlich erfassen kann.

Ferner kann der Häckseltrommelzustand den Beschädigungsgrad der Häckselmesser 8 aufweisen, der mittels der Anzeigeeinheit 50 dem Fahrer des selbstfahrenden Feldhäckslers 2 dargestellt wird. Basierend auf diesen Beschädigungsgrad der Häckselmesser 8 kann der Fahrer möglichen Folgeschäden aufgrund eines nicht mehr akzeptablen Beschädigungsgrades der Häckselmesser 8 vorausschauend und/oder frühzeitig entgegenwirken.

Die Einstellvorrichtung 19 ist dazu vorgesehen und eingerichtet, in Abhängigkeit des Beschädigungsgrades der Häckselmesser 8 zu ermitteln, ob ein Häckselmesser 8 defekt und/oder unrichtig montiert ist. Ferner ist die Einstellvorrichtung 19 dazu eingerichtet, in Abhängigkeit des Beschädigungsgrades der Häckselmesser 8 zu ermitteln, ob ein Häckselmesser 8 gebrochen und/oder herausgebrochen und/oder verschoben und/oder verformt ist. Zusätzlich kann die Einstellvorrichtung 19 dazu eingerichtet sein, mittels der Anzeigeeinheit 50 dem Fahrer des selbstfahrenden Feldhäckslers 2 darzustellen, welches Häckselmesser 8 ausgetauscht und/oder ersetzt werden muss.

Ferner können mittels einem nicht dargestellten Drehzahlsensor Drehzahlsensorinformationen erfasst werden, die eine Drehzahl eines nicht dargestellten Nockenrades der Häckseleinrichtung umfassen. Die Einstellvorrichtung ist dazu eingerichtet, basierend auf dem mittels der induktiven Erfassungsanordnung 25 erfassten Parametern und den Drehzahlsensorinformationen genau eine Umdrehung der Häckseltrommel 7 zu ermitteln. Hierfür kann das nicht dargestellte Nockenrad eine, insbesondere genau eine, Nocke aufweisen, die als Indikator für genau eine vollständige Umdrehung des Nockenrades fungiert. Eine vollständige Umdrehung des Nockenrades entspricht einer vollständigen Umdrehung der Häckseltrommel 7, sodass basierend auf diesem Indikator die Parameter bezüglich der Häckseleinrichtung 6 schon nach einer einzigen vollständigen Umdrehung dem jeweiligen Häckselmesser 8 zugeordnet werden können.

### Bezugszeichenliste

- 1: landwirtschaftliche Arbeitsmaschine
- 2: Selbstfahrender Feldhäcksler
- 3: Erntevorsatz
- 4: Einzugs- und Vorpresswalzen
- 5: Erntegutstrom
- 6: Häckseleinrichtung
- 7: Häckseltrommel
- 8: Häckselmesser
- 9: Häckselmesseranordnung a... b
- 10: Einzugsbereich
- 11: Gegenschneide
- 12: Cracker
- 13: Nachzerkleinerungseinrichtung
- 14: Nachbeschleunigungseinrichtung
- 15: Auswurfkrümmer
- 16: Auswurfkrümmerklappe
- 17: Messerschleifeinrichtung
- 18: Schleifstein
- 19: Einstellvorrichtung
- 20: Drehachse der Häckseltrommel
- 21: Trommelboden
- 22: Trommelrückwand
- 23: Sensoranordnung a...b
- 24: Schneidkante
- 25: induktive Erfassungsanordnung
- 26: magnetische Erregeranordnung
- 27: Polanordnung

- 50: Anzeigeeinheit

## Patentansprüche

1. Selbstfahrender Feldhäcksler (2)
- mit einem Erntevorsatz (3) zur Aufnahme von Erntegut,
- mit einer Häckseleinrichtung (6) zum Zerkleinern des aufgenommenen Ernteguts, wobei die Häckseleinrichtung (6) ein Trommelgehäuse (21, 22) aufweist, in dem eine mehrere Häckselmesser (8) aufweisende Häckseltrommel (7) angeordnet ist, wobei an dem Trommelgehäuse (21, 22) eine Messerschleifeinrichtung (17) mit einem Schleifstein (18) zur Schleifung der Häckselmesser (8) ausgebildet ist,
- mit einer induktiven Erfassungsanordnung (25) zur Erfassung von Parametern bezüglich der Häckseleinrichtung (6), wobei die Erfassungsanordnung (25) am Trommelgehäuse (21, 22) der Häckseleinrichtung (6) angeordnet ist,
- mit einer Einstellvorrichtung (19) zur Einstellung des Feldhäckslers (2), wobei die Einstellvorrichtung (19) kommunizierend mit der induktiven Erfassungsanordnung (25) verbunden ist,
**dadurch gekennzeichnet,**
- **dass** die Einstellvorrichtung (19) dazu vorgesehen und eingerichtet ist, basierend auf den mittels der induktiven Erfassungsanordnung (25) erfassten Parametern einen Häckseltrommelzustand bezüglich der eingesetzten Häckseltrommel (7) zu erkennen und zu visualisieren.

2. Selbstfahrender Feldhäcksler (2) nach einem der vorhergehenden Ansprüche,
**dadurch gekennzeichnet,**
**dass** der Häckseltrommelzustand die Art der Häckselmesser (8) umfasst.

3. Selbstfahrender Feldhäcksler (2) nach einem der vorhergehenden Ansprüche,
**dadurch gekennzeichnet,**
**dass** der Häckseltrommelzustand die Anzahl der Häckselmesser (8) umfasst.

4. Selbstfahrender Feldhäcksler (2) nach einem der vorhergehenden Ansprüche,
**dadurch gekennzeichnet,**
**dass** der Häckseltrommelzustand den Beschädigungsgrad der Häckselmesser (8) umfasst.

5. Selbstfahrender Feldhäcksler (2) nach einem der vorhergehenden Ansprüche,
**dadurch gekennzeichnet,**
**dass** der Häckseltrommelzustand die Art der Häckseltrommel (7) umfasst.

6. Selbstfahrender Feldhäcksler (2) nach Anspruch 4 oder 5,
**dadurch gekennzeichnet,**
**dass** die Einstellvorrichtung (19) dazu vorgesehen und eingerichtet ist, in Abhängigkeit des Beschädigungsgrades der Häckselmesser (8) zu ermitteln, ob ein Häckselmesser (8) defekt und/oder unrichtig montiert ist.

7. Selbstfahrender Feldhäcksler (2) nach einem der Ansprüche 4 bis 6,
**dadurch gekennzeichnet,**
**dass** die Einstellvorrichtung (19) dazu vorgesehen und eingerichtet ist, in Abhängigkeit des Beschädigungsgrades der Häckselmesser (8) zu ermitteln, ob ein Häckselmesser (8) gebrochen und/oder herausgebrochen ist.

8. Selbstfahrender Feldhäcksler (2) nach einem der Ansprüche 4 bis 7,
**dadurch gekennzeichnet,**
**dass** die Einstellvorrichtung (19) dazu vorgesehen und eingerichtet ist, in Abhängigkeit des Beschädigungsgrades der Häckselmesser (8) zu ermitteln, ob ein Häckselmesser (8) verschoben ist.

9. Selbstfahrender Feldhäcksler (2) nach einem der Ansprüche 4 bis 8,
**dadurch gekennzeichnet,**
**dass** die Einstellvorrichtung (19) dazu vorgesehen und eingerichtet ist, in Abhängigkeit des Beschädigungsgrades der Häckselmesser (8) zu ermitteln, ob ein Häckselmesser (8) verformt ist.

10. Selbstfahrender Feldhäcksler (2) nach einem der vorhergehenden Ansprüche,
**dadurch gekennzeichnet,**
**dass** der selbstfahrende Feldhäcksler (2) innerhalb einer Fahrerkabine eine Anzeigeeinheit (50) zur Visualisierung des Häckseltrommelzustandes aufweist.

11. Selbstfahrender Feldhäcksler (2) nach Anspruch 10,
**dadurch gekennzeichnet,**
**dass** die Einstellvorrichtung (19) dazu vorgesehen und eingerichtet ist, mittels der Anzeigeeinheit (50) einem Fahrer des selbstfahrenden Feldhäckslers (2) darzustellen, welches Häckselmesser (8) welchen Beschädigungsgrad aufweist.

12. Selbstfahrender Feldhäcksler (2) nach Anspruch 10 oder 11,
**dadurch gekennzeichnet,**
**dass** die Einstellvorrichtung (19) dazu vorgesehen und eingerichtet ist, mittels der Anzeigeeinheit (50) einem Fahrer des selbstfahrenden Feldhäckslers (2) darzustellen, welches Häckselmesser (8) ausgetauscht und/oder ersetzt werden muss.

13. Selbstfahrender Feldhäcksler (2) nach einem der vorhergehenden Ansprüche,
**dadurch gekennzeichnet,**
**dass** die Einstellvorrichtung (19) dazu vorgesehen und eingerichtet ist, basierend auf dem mittels der induktiven Erfassungsanordnung (25) erfassten Parametern und den Drehzahlsensorinformationen genau eine Umdrehung der Häckseltrommel (7) zu ermitteln.

14. Selbstfahrender Feldhäcksler (2) nach Anspruch 13,
**dadurch gekennzeichnet,**
**dass** die Drehzahlsensorinformationen mittels einem Drehzahlsensor zur Messung einer Drehzahl eines Nockenrades der Häckseleinrichtung (6) erfasst wird.

15. Selbstfahrender Feldhäcksler (2) nach Anspruch 14,
**dadurch gekennzeichnet,**
**dass** das Nockenrad eine Nocke aufweist, die als Indikator für genau eine Umdrehung des Nockenrades fungiert.
